(19) Europäisches Patentamt / European Patent Office / Office européen des brevets

(11) **EP 2 933 642 A1**

(12) **EUROPEAN PATENT APPLICATION**
published in accordance with Art. 153(4) EPC

(43) Date of publication:
**21.10.2015 Bulletin 2015/43**

(51) Int Cl.:
*G01P 5/12* (2006.01)     *G01F 1/692* (2006.01)
*H01C 7/04* (2006.01)

(21) Application number: **13862045.5**

(22) Date of filing: **21.11.2013**

(86) International application number:
**PCT/JP2013/081986**

(87) International publication number:
**WO 2014/091932 (19.06.2014 Gazette 2014/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.12.2012 JP 2012271938**

(71) Applicant: **Mitsubishi Materials Corporation**
**Chiyoda-ku**
**Tokyo 100-8117 (JP)**

(72) Inventors:
• **NAGATOMO, Noriaki**
**Naka-shi**
**Ibaraki 311-0102 (JP)**
• **INABA, Hitoshi**
**Naka-shi**
**Ibaraki 311-0102 (JP)**

(74) Representative: **Hoffmann Eitle**
**Patent- und Rechtsanwälte PartmbB**
**Arabellastraße 30**
**81925 München (DE)**

(54) **AIRFLOW SENSOR**

(57)     Provided is a gas flow sensor that includes a heat-sensitive element for measurement disposed inside a duct through which a gas to be measured flows and a support mechanism for supporting the heat-sensitive element for measurement inside the duct. The heat-sensitive element for measurement includes an insulating film; a thin film thermistor portion formed on the surface of the insulating film with a thermistor material; a pair of comb electrodes which have a plurality of comb portions and are pattern-formed on the thin film thermistor portion using a metal so as to face each other; and a pair of pattern electrodes which are pattern-formed on the surface of the insulating film and are connected to the pair of comb electrodes. The support mechanism is disposed such that the planar direction of the insulating film is parallel to the direction of gas flow in the duct.

[FIG. 1]

EP 2 933 642 A1

**Description**

BACKGROUND OF THE INVENTION

[Field of the Invention]

The present invention relates to a gas flow sensor that measures a flow rate of gas flow such as air using a heat-sensitive element such as a thermistor.

[Description of the Related Art]

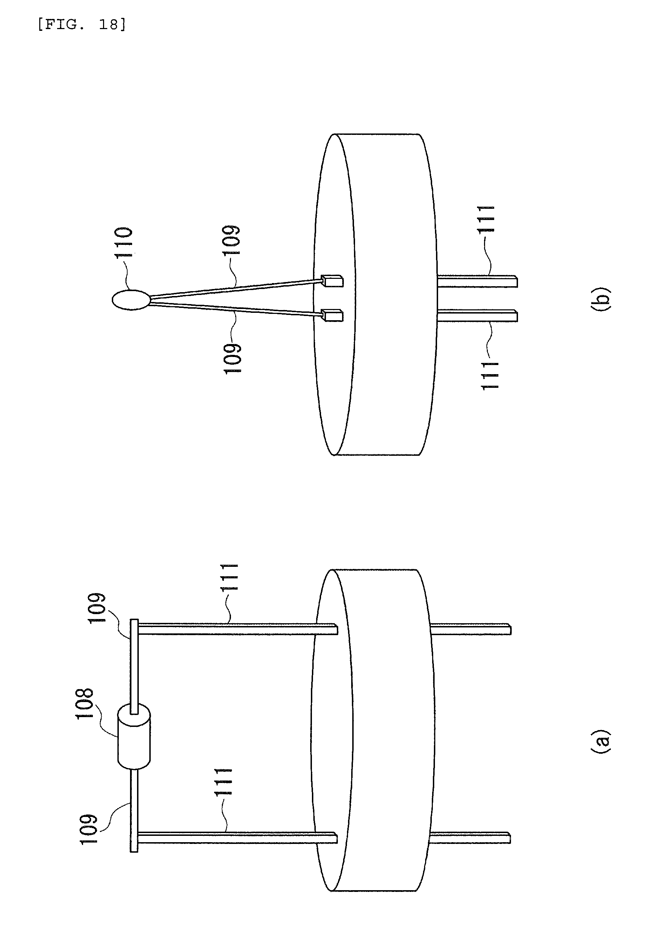

As a conventional gas flow sensor for measuring gas flow such as air, for example, Patent Document 1 discloses an air flow rate measuring apparatus that includes a bypass flow path which is arranged orthogonally to the stream line of air flowing through an air flow path, and a sensing unit which is disposed within the bypass flow path so as to measure a flow rate of air flowing through the air flow path. In the air flow rate measuring apparatus, a thermistor which is an air temperature measuring element in the sensing unit and a pair of lead members are disposed so as to be tilted in the planar direction of the flow direction in the bypass flow path with respect to the stream line of air flowing through the air flow path. As the thermistor, a cylindrical thermistor 108 with a pair of lead members 109 bonded thereto is used as shown in FIG. 18(a).

In addition, Patent Document 2 discloses a vane anemometer that includes a duct tube having a measurement duct therein, an anemometer consisting of a temperature dependent resistance element disposed in the measurement duct, and two temperature sensors disposed to sandwich the anemometer. In the vane anemometer, a generally spherical thermistor 110 as shown in FIG. 18(b) or the like is used as the temperature dependent resistance element.

[Prior Art Documents]

[Patent Documents]

[Patent Document 1] Japanese Unexamined Patent Application Publication No. 2010-181354
[Patent Document 2] Japanese Unexamined Patent Application Publication No. 2003-75461

SUMMARY OF THE INVENTION

[Problems to be solved by the Invention]

The following problems still remain in the conventional techniques described above.

Since the cylindrical thermistor 108 or the generally spherical thermistor 110 is used in the conventional gas flow sensor as shown in FIG. 18, the thermistor itself has a large volume, resulting in an undesirable increase in heat capacity and decrease in responsiveness. Thus, measurement accuracy may be particularly decreased due to a weak gas flow or an abrupt change in gas flow. A large volume thermistor may cause disturbance in gas flow around the thermistor, resulting in an undesirable decrease in measurement accuracy.

The present invention has been made in view of the aforementioned circumstances, and an object of the present invention is to provide a gas flow sensor that exhibits excellent responsiveness, hardly disturbs the gas flow, and is capable of performing highly-accurate measurement.

[Means for Solving the Problems]

The present invention adopts the following structure in order to solve the aforementioned problems. Specifically, a gas flow sensor according to a first aspect of the present invention is characterized in that the gas flow sensor includes a heat-sensitive element for measurement disposed inside a duct through which a gas to be measured flows and a support mechanism for supporting the heat-sensitive element for measurement inside the duct, wherein the heat-sensitive element for measurement includes an insulating film; a thin film thermistor portion formed on the surface of the insulating film with a thermistor material; a pair of comb electrodes which have a plurality of comb portions and are pattern-formed on at least one of the top or the bottom of the thin film thermistor portion using a metal so as to face each other; and a pair of pattern electrodes which are pattern-formed on the surface of the insulating film and are connected to the pair of comb electrodes, and wherein the support mechanism is disposed such that the planar direction of the insulating film is parallel to the direction of gas flow in the duct.

Since, in the gas flow sensor, the heat-sensitive element for measurement includes a thin film thermistor portion formed on an insulating film and the support mechanism is disposed such that the planar direction of the insulating film is parallel to the direction of gas flow in the duct, the thin-film type heat-sensitive element for measurement is disposed along gas flow. Thus, the gas flow sensor does not disturb gas flow and has a small heat capacity, resulting in obtaining excellent responsiveness and high measurement accuracy.

A gas flow sensor according to a second aspect of the present invention is characterized in that the support mechanism includes a pair of tabular measurement lead frames for supporting the insulating film with the distal ends of the measurement lead frames being connected to the pair of pattern electrodes and the support mechanism is disposed such that the planar direction of the pair of measurement lead frames is parallel to the direction of gas flow in the duct according to the first aspect of the present invention.

Specifically, since, in the gas flow sensor, the support mechanism is disposed such that the planar direction of the pair of measurement lead frames is parallel to the direction of gas flow in the duct, the tabular measurement lead frames are disposed along gas flow, so that the gas flow disturbance caused by the measurement lead frames may be reduced as much as possible.

A gas flow sensor according to a third aspect of the present invention is characterized in that the gas flow sensor includes a heat-sensitive element for compensation disposed apart from the heat-sensitive element for measurement at a position at which the temperature of gas in the duct is measurable and a cover member for covering the heat-sensitive element for compensation so as to interrupt the gas flow according to the first or second aspect of the present invention.

Specifically, since the gas flow sensor includes a heat-sensitive element for compensation and a cover member for covering the heat-sensitive element for compensation so as to interrupt the gas flow, temperature compensation can be made by measuring the gas temperature of the gas flow by the heat-sensitive element for compensation surrounded by the cover member so as not to be affected by a direct collision of the gas flow, resulting in achieving further highly-accurate measurement. Since the heat-sensitive element for compensation and the cover member are disposed apart from the heat-sensitive element for measurement, the gas temperature of the gas flow can be measured while avoiding disturbance in gas flow around the heat-sensitive element for measurement.

A gas flow sensor according to a fourth aspect of the present invention is characterized in that the thin film thermistor portion consists of a metal nitride represented by the general formula: $Ti_xAl_yN_z$ (where $0.70 \leq y/(x+y) \leq 0.95$, $0.4 \leq z \leq 0.5$, and $x+y+z = 1$), and the crystal structure thereof is a hexagonal wurtzite-type single phase according to any one of the first to third aspects of the present invention.

The present inventors' serious endeavor by focusing on an AlN-based material among nitride materials found that, although AlN is an insulator and it is difficult for AlN to obtain an optimum thermistor characteristic (B constant: about 1000 to 6000 K), the AlN-based material having a good B constant and exhibiting excellent heat resistance may be obtained without firing by substituting Al-site with a specific metal element for improving electric conductivity and by forming it into a specific crystal structure.

Thus, the present invention has been obtained on the basis of the above finding. Since the thin film thermistor portion consists of a metal nitride represented by the general formula: $Ti_xAl_yN_z$ (where $0.70 \leq y/(x+y) \leq 0.95$, $0.4 \leq z \leq 0.5$, and $x+y+z = 1$), wherein the crystal structure thereof is a hexagonal wurtzite-type single phase, the metal nitride material having a good B constant and exhibiting excellent heat resistance may be obtained without firing.

Note that, if the value "y/(x+y)" (i.e., Al/(Ti+Al)) is less than 0.70, a wurtzite-type single phase is not obtained but two coexist phases of a wurtzite-type phase and a NaCl-type phase or a single phase of only a NaCl-type phase may be obtained, so that a sufficiently high resistance and a high B constant cannot be obtained.

If the ratio of "y/(x+y)" (i.e., Al/(Ti+Al)) exceeds 0.95, the metal nitride material exhibits very high resistivity and extremely high electrical insulation, so that the metal nitride material is not applicable as a thermistor material.

If the ratio of "z" (i.e., N/(Ti+Al+N)) is less than 0.4, the amount of nitrogen contained in the metal is small, so that a wurtzite-type single phase cannot be obtained. Consequently, a sufficiently high resistance and a high B constant cannot be obtained.

Furthermore, if the ratio of "z" (i.e., N/(Ti+Al+N)) exceeds 0.5, a wurtzite-type single phase cannot be obtained. This is because a stoichiometric ratio of N/(Ti+Al+N) in a wurtzite-type single phase when there is no defect at nitrogen-site is 0.5.

[Effects of the Invention]

According to the present invention, the following effects may be provided.

Specifically, since the heat-sensitive element for measurement includes a thin film thermistor portion formed on an insulating film and the support mechanism is disposed such that the planar direction of the insulating film is parallel to the direction of gas flow in the duct according to the gas flow sensor of the present invention, the thin-film type heat-sensitive element for measurement is disposed along gas flow. Thus, the gas flow sensor does not disturb gas flow and has a small heat capacity, resulting in obtaining excellent responsiveness and high measurement accuracy.

Furthermore, the thin film thermistor portion consists of a metal nitride represented by the general formula: $Ti_xAl_yN_z$ (where $0.70 \leq y/(x+y) \leq 0.95$, $0.4 \leq z \leq 0.5$, and $x+y+z = 1$), and the crystal structure thereof is a hexagonal wurtzite-type single phase, the metal nitride material having a good B constant and exhibiting excellent heat resistance may be obtained without firing.

[Brief Description of the Drawings]

FIG. 1(a) is a side view illustrating a gas flow sensor disposed in a duct according to one embodiment of the present invention.

FIG. 1(b) is a front view illustrating a gas flow sensor disposed in a duct according to one embodiment of the present invention.

FIG. 2 is a perspective view illustrating a gas flow sensor according to the present embodiment.

FIG. 3 is an example of a plan view and a cross-sectional view taken along the line A-A, illustrating a heat-sensitive element for measurement and a heat-sensitive element for compensation according to the present embodiment.

FIG. 4 is a Ti-Al-N-based ternary phase diagram illustrating the composition range of a metal nitride material for a thermistor according to the present embodiment.

FIG. 5 is an example of a plan view and a cross-sectional view taken along the line B-B, illustrating a thin film thermistor portion forming step according to the present embodiment.

FIG. 6 is an example of a plan view and a cross-sectional view taken along the line C-C, illustrating an electrode forming step according to the present embodiment.

FIG. 7 is an example of a plan view and a cross-sectional view taken along the line D-D, illustrating a protective film forming step according to the present embodiment.

FIG. 8 is a graph illustrating the relationship between a speed of gas flow and a heat dissipation constant (a relative value of a heat dissipation constant with respect to a heat dissipation constant at a speed of gas flow of 0 m/sec) according to Example of the gas flow sensor of the present invention.

FIG. 9 is an example of a front view and a plan view illustrating a film evaluation element for a metal nitride material for a thermistor according to Example of the gas flow sensor of the present invention.

FIG. 10 is a graph illustrating the relationship between a resistivity at 25 °C and a B constant according to Examples and Comparative Example of the present invention.

FIG. 11 is a graph illustrating the relationship between the Al/(Ti+Al) ratio and the B constant according to Examples and Comparative Example of the present invention.

FIG. 12 is a graph illustrating the result of X-ray diffraction (XRD) in the case of a strong c-axis orientation where Al/(Ti+Al) = 0.84 according to Example of the present invention.

FIG. 13 is a graph illustrating the result of X-ray diffraction (XRD) in the case of a strong a-axis orientation where Al/(Ti+Al) = 0.83 according to Example of the present invention.

FIG. 14 is a graph illustrating the result of X-ray diffraction (XRD) in the case where Al/(Ti+Al) = 0.60 according to Comparative Example of the present invention.

FIG. 15 is a graph illustrating the relationship between the Al/(Ti+Al) ratio and the B constant obtained by comparing Example revealing a strong a-axis orientation and Example revealing a strong c-axis orientation according to Examples of the present invention.

FIG. 16 is a cross-sectional SEM photograph illustrating Example revealing a strong c-axis orientation according to Example of the present invention.

FIG. 17 is a cross-sectional SEM photograph illustrating Example revealing a strong a-axis orientation according to Example of the present invention.

FIG. 18 is a perspective view illustrating a conventional example of the gas flow sensor of the present invention.

[Best Modes for Carrying Out the Invention]

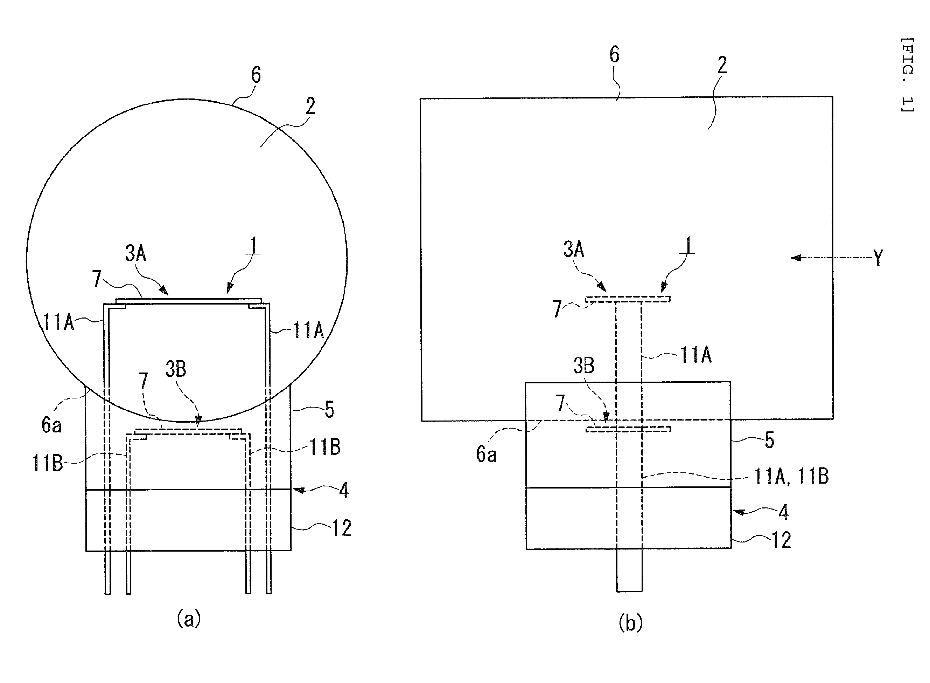

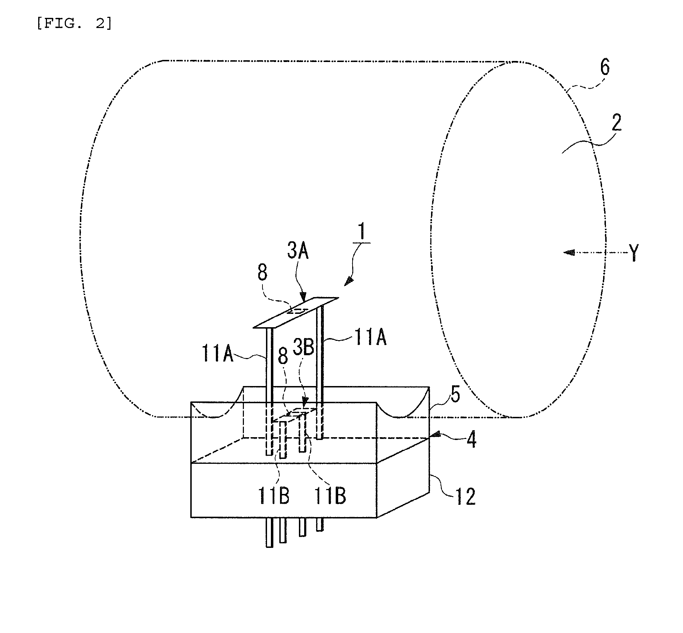

Hereinafter, a description will be given of a gas flow sensor according to one embodiment of the present invention with reference to FIGs. 1 to 8. In a part of the drawings used in the following description, the scale of each component is changed as appropriate so that each component is recognizable or is readily recognized.

As shown in FIGs. 1 to 3, a gas flow sensor (1) of the present embodiment includes a heat-sensitive element for measurement (3A) disposed inside a duct (2) through which a gas to be measured flows, a support mechanism (4) for supporting the heat-sensitive element for measurement (3A) inside the duct (2), a heat-sensitive element for compensation (3B) disposed apart from the heat-sensitive element for measurement (3A) at a position at which the temperature of gas in the duct (2) is measurable, and a cover member (5) for covering the heat-sensitive element for compensation (3B) so as to interrupt the gas flow.

In the present embodiment, the duct (2) is formed in a cylindrical duct tubing (6) and the gas flow sensor (1) is mounted on the duct tubing (6).

Each of the heat-sensitive element for measurement (3A) and the heat-sensitive element for compensation (3B) is a film-type thermistor that includes an insulating film (7), a thin film thermistor portion (8) formed on the surface of the insulating film (7) with a thermistor material, a pair of comb electrodes (9) which have a plurality of comb portions (9a) and are pattern-formed on the top of the thin film thermistor portion (8) using a metal so as to face each other, and a pair of pattern electrodes (10) which are pattern-formed on the surface of the insulating film (7) and are connected to the pair of comb electrodes (9).

The support mechanism (4) is disposed such that the planar direction of the insulating film (7) is parallel to the direction Y (stream line direction of gas flow) of gas flow in the duct (2).

The support mechanism (4) includes a pair of tabular measurement lead frames (11A) for supporting the insulating film (7) of the heat-sensitive element for measurement (3A) with the distal ends of the measurement lead frames (11A) being connected to the pair of pattern electrodes (10) of the heat-sensitive element for measurement (3A), a pair of tabular compensation lead frames (11B) for supporting the insulating film (7) of the heat-sensitive element for compensation (3B) with the distal ends of the compensation lead frames (11B) being connected to the pair of pattern electrodes (10) of the heat-sensitive element for compensation (3B), and a frame support member (12) for fixing these lead frames.

The planar direction of the pair of measurement lead frames (11A) is parallel to the direction Y of gas flow in the duct (2). Specifically, the planar direction of the measurement lead frames (11A) is parallel to the axis of the duct tubing (6). The measurement lead frames (11A) extend in a direction orthogonal to the direction Y of gas flow. The heat-sensitive element for measurement (3A) and the heat-sensitive element for compensation (3B) are stretched in parallel to each other by the pair of measurement lead frames (11A) and the pair of compensation lead frames (11B).

The frame support member (12) is formed of an insulating material such as a resin in which the respective lead frames are disposed in a through state, and the cover member (5) is attached above the frame support member (12).

The cover member (5) is formed in a substantially rectangular tube shape so as to cover the surrounding of the heat-sensitive element for compensation (3B). The cover member (5) is set to form walls such that the flow of gas is suppressed around the heat-sensitive element for compensation (3B) disposed inside the cover member (5) so as not to create turbulence as much as possible.

The cover member (5) is fixed to the outside of the duct tubing (6) with the upper portion of the cover member (5) being attached to the surrounding of a substantially quadrilateral hole portion (6a) opened in the duct tubing (6). In this state, the heat-sensitive element for measurement (3A) is disposed approximately in the center of the duct tubing (6), and the heat-sensitive element for compensation (3B) is disposed in the vicinity of the hole portion (6a) formed in the duct tubing (6) and outside the duct (2). As described above, the heat-sensitive element for compensation (3B) and the cover member (5) are disposed apart from the heat-sensitive element for measurement (3A) so as not to disturb gas flow in the duct (2), particularly, gas flow around the heat-sensitive element for measurement (3A). The heat-sensitive element for compensation (3B) is disposed to be capable of measuring the temperature of gas flow via the hole portion (6a).

The gas flow sensor (1) of the present embodiment includes the protective film (13) for covering the thin film thermistor portion (8), the comb electrodes (9), the pattern electrodes (10), all of which are formed on the insulating film (7) excluding the ends of the insulating film (7) at which proximal ends (the terminal portions (10a)) of the pattern electrodes (10) are disposed.

While, in the present embodiment, the comb electrodes (9) are formed on the thin film thermistor portion (8), the comb electrodes (9) may also be formed under the thin film thermistor portion (8).

The insulating film (7) is, for example, a polyimide resin sheet formed in a band shape having a thickness of from 7.5 to 125 $\mu$m. Other examples of the insulating film (7) include polyethylene terephthalate (PET), polyethylene naphthalate (PEN), and the like.

The thin film thermistor portion (8) is formed of a thermistor material of TiAlN. In particular, the thin film thermistor portion (8) consists of a metal nitride represented by the general formula: $Ti_xAl_yN_z$ (where $0.70 \leq y/(x+y) \leq 0.95$, $0.4 \leq z \leq 0.5$, and $x+y+z = 1$), and the crystal structure thereof is a hexagonal wurtzite-type single phase.

Each of the pattern electrodes (10) and the comb electrodes (9) has a bonding layer of Cr or NiCr having a film thickness of from 5 to 100 nm formed on the thin film thermistor portion (8) and an electrode layer of a noble metal such as Au having a film thickness of from 50 to 1000 nm formed on the bonding layer.

The pair of comb electrodes (9) is arranged in opposing relation to each other such that the comb portions (9a) are interlocked with one another in an alternating comb-like pattern.

The distal ends of the pair of pattern electrodes (10) are connected to the corresponding comb electrodes (9) and the proximal ends of the pair of pattern electrodes (10) are the terminal portions (10a) arranged at the proximal end of the insulating film (7).

The protective film (13) is an insulating resin film or the like, and a polyimide film having a thickness of 20 $\mu$m is employed as the protective film (13).

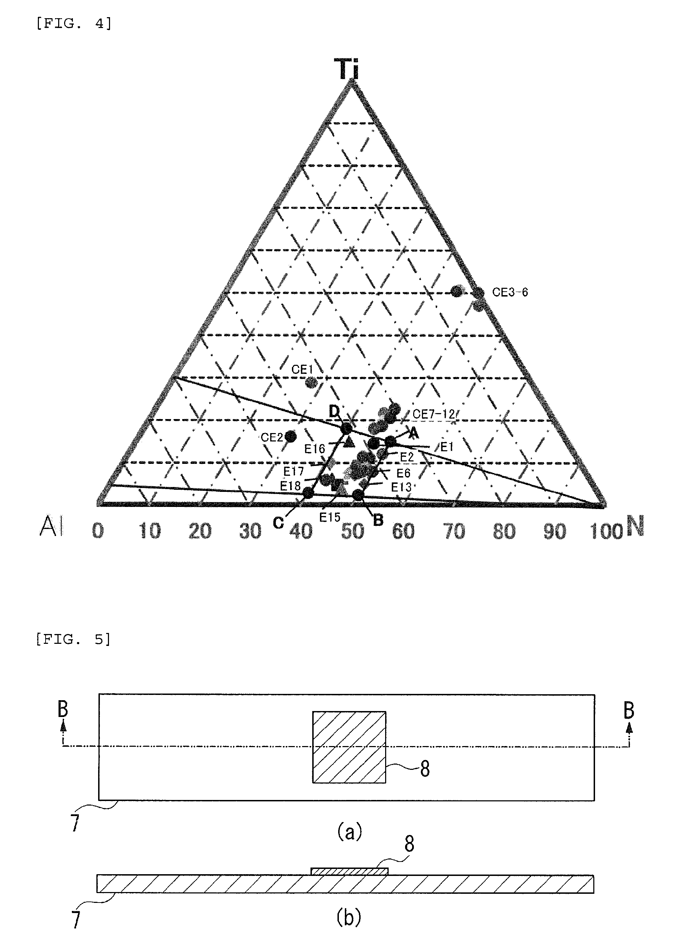

As described above, the thin film thermistor portion (8) is a metal nitride material consisting of a metal nitride represented by the general formula: $Ti_xAl_yN_z$ (where $0.70 \leq y/(x+y) \leq 0.95$, $0.4 \leq z \leq 0.5$, and $x+y+z = 1$), wherein the crystal structure thereof is a wurtzite-type (space group $P6_3mc$ (No. 186)) single phase having a hexagonal crystal system. Specifically, the metal nitride material has a composition within the region enclosed by the points A, B, C, and D in the Ti-Al-N-based ternary phase diagram as shown in FIG. 5, wherein the crystal phase thereof is a wurtzite-type metal nitride.

Note that the composition ratios (x, y, z) (at %) at the points A, B, C, and D are A (15, 35, 50), B (2.5, 47.5, 50), C (3, 57, 40), and D (18, 42, 40), respectively.

Also, the thin film thermistor portion (8) is formed into the shape of a film having a film thickness of from 100 to 1000 nm and is a columnar crystal extending in a vertical direction to the surface of the film. Furthermore, it is preferable that the thin film thermistor portion (8) is strongly oriented along the c-axis more than the a-axis in a vertical direction to the surface of the film.

Note that the decision on whether the thin film thermistor portion (8) has a strong a-axis orientation (100) or a strong c-axis orientation (002) in a vertical direction (film thickness direction) to the surface of the film is determined whether the peak intensity ratio of "the peak intensity of (100)"/"the peak intensity of (002)" is less than 1 by examining the orientation of crystal axis using X-ray diffraction (XRD), where (100) is the Miller index indicating a-axis orientation and (002) is the Miller index indicating c-axis orientation.

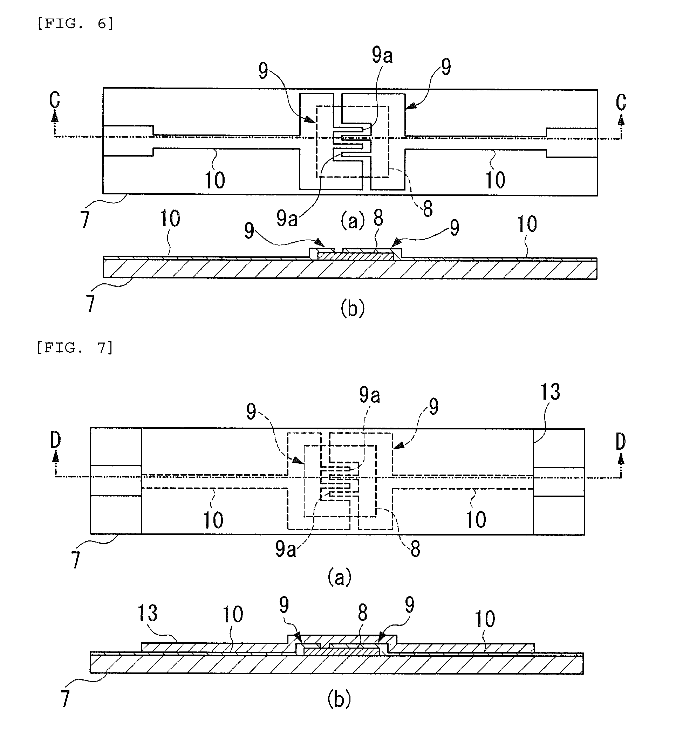

A description will be given below of a method for producing the gas flow sensor (1) with reference to FIGs. 6 to 8.

Firstly, the method for producing the heat-sensitive element for measurement (3A) and the heat-sensitive element for compensation (3B) of the present embodiment includes a thin film thermistor portion forming step of forming the thin film thermistor portion (8) on the insulating film (7); an electrode forming step of pattern-forming the pair of comb electrodes (9) and the pair of pattern electrodes (10) facing each other on the thin film thermistor portion (8); and a protective film forming step of forming the protective film (13) on these surfaces.

As a more specific example of such a production method, a thermistor film of $Ti_xAl_yN_z$ (x = 9, y = 43, z = 48) having a film thickness of 200 nm is formed on the insulating film (7) made of a polyimide film having a thickness of 40 $\mu$m using a Ti-Al alloy sputtering target in the reactive sputtering method in a nitrogen-containing atmosphere. The film is produced under the sputtering conditions of an ultimate degree of vacuum of $5 \times 10^{-6}$ Pa, a sputtering gas pressure of 0.4 Pa, a target input power (output) of 200 W, and a nitrogen gas fraction under a mixed gas (Ar gas + nitrogen gas) atmosphere of 20%.

Furthermore, a resist solution is coated on the formed thermistor film using a bar coater, and then prebaking is performed for 1.5 minutes at a temperature of 110 °C. After being exposed by an exposure apparatus, an unnecessary portion is removed by a developing solution, and then patterning is performed by post baking for 5 minutes at a temperature of 150 °C. Then, an unnecessary thermistor film of $Ti_xAl_yN_z$ is subject to wet etching using commercially available Ti etchant, and then the resist is stripped so as to form the thin film thermistor portion (8) in a quadrilateral shape as shown in FIG. 5.

Next, a bonding layer of a Cr film having a film thickness of 20 nm is formed on the thin film thermistor portion (8) and the insulating film (7) in the sputtering method. An electrode layer of an Au film having a film thickness of 100 nm is further formed on the bonding layer in the sputtering method.

Next, a resist solution is coated on the formed electrode layer using a bar coater, and then prebaking is performed for 1.5 minutes at a temperature of 110 °C. After being exposed by an exposure apparatus, an unnecessary portion is removed by a developing solution, and then patterning is performed by post baking for 5 minutes at a temperature of 150 °C. Then, an unnecessary electrode portion is subject to wet etching sequentially using commercially available Au etchant and Cr etchant, and then the resist is stripped so as to form the desired comb electrodes (9) and pattern electrodes (10) as shown in FIG. 6.

Next, an adhesive-backed polyimide coverlay film is positioned on the insulating film (7) excluding the proximal ends of the insulating film (7) including portions to be the terminal portions (10a) and then is pressurized at a temperature of 150 °C at 2N/m by a press machine for 30 minutes. Then, the polyimide coverlay film is bonded to the insulating film (7) to thereby form a polyimide protective film (13) as shown in FIG. 7 thereon. The protective film may also be formed by printing with use of a polyimide resin material.

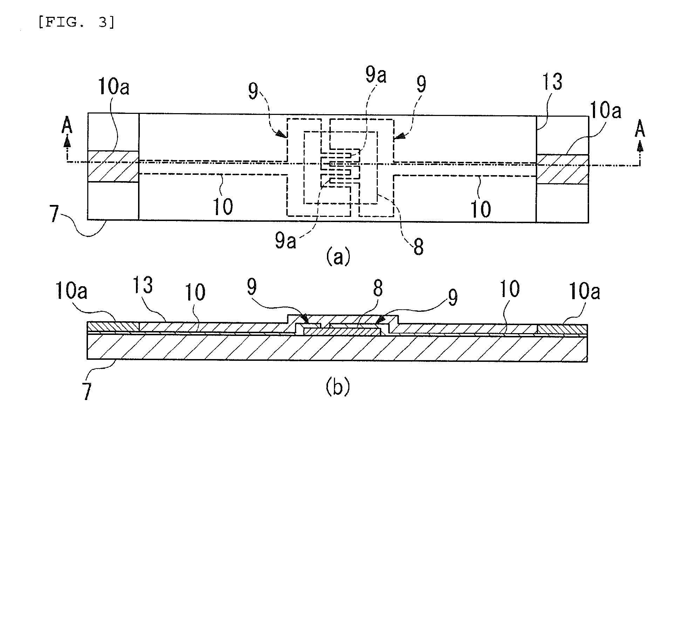

Furthermore, a Ni plating with a thickness of 3 $\mu$m and a Sn plating with a thickness of 10 $\mu$m for soldering connections are deposited on portions to be the terminal portions (10a) by using the plating solution as shown in FIG. 3, so that a plated layer is formed as the terminal portions (10a). Thus, the heat-sensitive element for measurement (3A) or the heat-sensitive element for compensation (3B) is produced.

When a plurality of heat-sensitive element for measurements (3A) and heat-sensitive element for compensations (3B) is simultaneously produced, the thin film thermistor portion (8), the comb electrodes (9), the pattern electrodes (10), and the protective film (13) are formed in plural on a large sized sheet of the insulating film (7) as described above, and then the resulting laminated large sheet is cut into a plurality of heat-sensitive elements.

Next, the terminal portions (10a) of the produced heat-sensitive element for measurement (3A) and heat-sensitive element for compensation (3B) are connected to the distal ends of the measurement lead frames (11A) and the compensation lead frames (11B) corresponding thereto respectively via a solder material with the protective film (13) facing the frame support member (12). Note that the distal ends of each of the pair of measurement lead frames (11A) and the pair of the compensation lead frames (11B) are bent by 90 degrees in a direction opposite to each other, and the terminal portions (10a) is bonded to the distal ends, so that the heat-sensitive element for measurement (3A) or the heat-sensitive element for compensation (3B) is secured in a stretched state.

"Principle of gas flow speed measurement"

In the gas flow sensor (1), the thin film thermistor portion (8) in the heat-sensitive element for measurement (3A) is self-heated to a temperature higher than ambient temperature by flowing electric current therethrough, resulting in movement in the surrounding gas. Consequently, heat is removed from the gas flow sensor (1) to be cooled down. In other words, heat dissipation changes with change in gas flow, resulting in change in the thermistor temperature, i.e., the resistance value of the thin film thermistor portion (8). The gas flow sensor (1) of the present embodiment measures a speed of gas flow with use of this principle. The thermistor temperature of the thin film thermistor portion (8) also changes due to the temperature of the gas flow. Thus, in the present embodiment, the gas flow temperature is separately measured by the heat-sensitive element for compensation (3B) for temperature compensation.

As described above, since in the gas flow sensor (1) of the present embodiment, the heat-sensitive element for measurement (3A) includes the thin film thermistor portion (8) formed on an insulating film (7) and the support mechanism (4) is disposed such that the planar direction of the insulating film (7) is parallel to the direction Y of gas flow in the duct (2), the thin-film type heat-sensitive element for measurement (3A) is disposed along gas flow. Thus, the gas flow sensor (1) does not disturb gas flow and has a small heat capacity, resulting in obtaining excellent responsiveness and high measurement accuracy.

Since the support mechanism (4) is disposed such that the planar direction of the pair of measurement lead frames (11A) is parallel to the direction of gas flow in the duct (2), the tabular measurement lead frames (11A) are disposed along gas flow, so that the gas flow disturbance caused by the measurement lead frames (11A) may be reduced as much as possible.

Furthermore, since the gas flow sensor (1) includes the heat-sensitive element for compensation (3B) and the cover member (5) for covering the heat-sensitive element for compensation (3B) so as to interrupt the gas flow, temperature compensation can be made by measuring the gas temperature of the gas flow by the heat-sensitive element for compensation (3B) surrounded by the cover member (5) so as not to be affected by a direct collision of the gas flow, resulting in achieving further highly-accurate measurement.

Since the thin film thermistor portion (8) consists of a metal nitride represented by the general formula: $Ti_xAl_yN_z$ (where $0.70 \leq y/(x+y) \leq 0.95$, $0.4 \leq z \leq 0.5$, and $x+y+z = 1$), wherein the crystal structure thereof is a wurtzite-type single phase having a hexagonal crystal system, the metal nitride material having a good B constant and exhibiting excellent heat resistance may be obtained without firing.

Since the metal nitride material is a columnar crystal extending in a vertical direction to the surface of the film, the crystallinity of the film is high, resulting in obtaining high heat resistance.

Furthermore, since the metal nitride material is strongly oriented along the c-axis more than the a-axis in a vertical direction to the surface of the film, the metal nitride material having a high B constant as compared with the case of a strong a-axis orientation is obtained.

Since, in the method for producing the thermistor material layer (the thin film thermistor portion (8)) of the present embodiment, film deposition is performed by reactive sputtering in a nitrogen-containing atmosphere using a Ti-Al alloy sputtering target, the metal nitride material consisting of the above TiAlN can be deposited on a film without firing.

Since a sputtering gas pressure during the reactive sputtering is set to less than 0.67 Pa, the film made of the metal nitride material, which is strongly oriented along the c-axis more than the a-axis in a vertical direction to the surface of the film, can be formed.

Thus, since, in the gas flow sensor (1) of the present embodiment, the thin film thermistor portion (8) is formed of the thermistor material layer on the insulating film (7), the insulating film (7) having low heat resistance, such as a resin film, can be used by the presence of the thin film thermistor portion (8) which is formed without firing and has a high B constant and high heat resistance, so that a thin and flexible thermistor sensor having an excellent thermistor characteristic can be obtained.

Conventionally, a substrate material using a ceramics material such as alumina has often been used. For example, if the substrate material is thinned to a thickness of 0.1 mm, the substrate material is very fragile and easily breakable. In the present invention, a film can be used, so that a very thin film-type thermistor sensor having a thickness of 0.1 mm can be obtained.

[Examples]

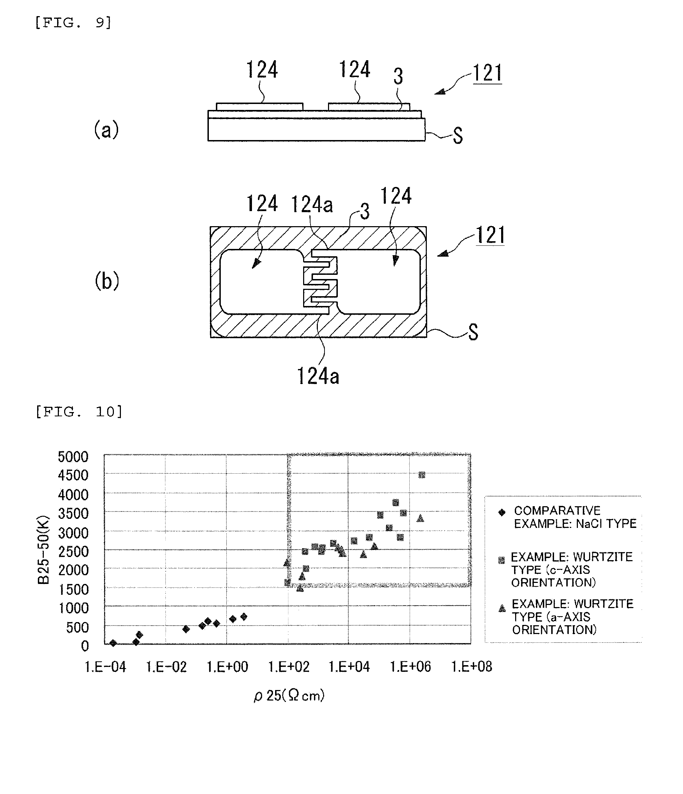

Next, the evaluation results of Examples produced based on the above embodiment with regard to the gas flow sensor according to the present invention will be specifically described with reference to FIGs. 9 to 17.

<Measurement of heat dissipation constant and thermal time constant by self-heating>

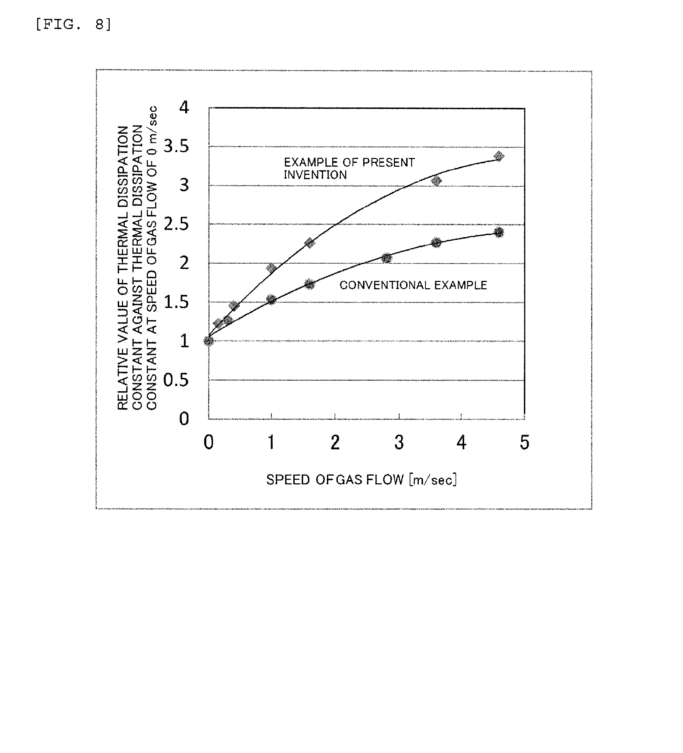

The results obtained by measuring the heat dissipation constant against a speed of gas flow in Conventional Example with use of a lead-type thermistor covered with a glass having a diameter of 1.35 mm and in Example with use of the gas flow sensor of the present invention are shown in FIG. 8.

Note that the heat dissipation constant 5 is a constant representing electrical power required for increasing the temperature of a thermistor element in a thermal equilibrium state to 1 °C by self-heating, and the following relationship is established among the thermistor temperature T1 in a thermal equilibrium, the surrounding temperature T0, the electric current I, and the resistance value R.

$$\delta = I^2 \times R / (T1 - T0)$$

The heat dissipation constant $\delta$ changes with change in gas flow speed but does not change with change in temperature of gas flow.

As a result of measuring the heat dissipation constant, the heat dissipation constant sensitively changes against a speed of gas flow even in the case of weak gas flow as compared with Conventional Example, and thus, it can be seen that the gas flow sensor in Example of the present invention is capable of measuring a speed of gas flow with accuracy.

As a result of measuring the thermal time constant in quiescent air, the gas flow sensor in Conventional Example is 5.9 seconds, whereas the gas flow sensor in Example of the present invention is 0.7 seconds, which exhibits a very quick responsiveness. Thus, the gas flow sensor of the present invention can measure gas flow with accuracy even in the case of abrupt change in gas flow.

Note that the thermal time constant is a time taken for changing the temperature difference between the initial temperature of the thermistor element and the surrounding temperature by 63.2% when the thermistor element is disposed in quiescent air at a temperature of 25 °C, electric current is flown through the thermistor element, and then electric current is abruptly changed to zero from the thermal equilibrium at a temperature of 50 °C by self-heating. Note that the responsiveness increases (the thermal time constant decreases) with increase in a speed of gas flow.

<Production of film evaluation element>

Film evaluation elements (121) shown in FIG. 9 were produced as follows as Examples and Comparative Examples for evaluating the thermistor material layer (the thin film thermistor portion (8)) of the present invention.

Firstly, each of the thin film thermistor portions (8) having a thickness of 500 nm, which were made of the metal nitride materials formed with various composition ratios as shown in Table 1, was formed on a Si wafer with a thermal oxidation film as a Si substrate (S) by using Ti-Al alloy targets formed with various composition ratios in the reactive sputtering method. The thin film thermistor portions (8) were produced under the sputtering conditions of an ultimate degree of vacuum of $5 \times 10^{-6}$ Pa, a sputtering gas pressure of from 0.1 to 1 Pa, a target input power (output) of from 100 to 500 W, and a nitrogen gas fraction under a mixed gas (Ar gas + nitrogen gas) atmosphere of from 10 to 100%.

Next, a Cr film having a thickness of 20 nm was formed and an Au film having a thickness of 100 nm was further formed on the thin film thermistor portions (8) by the sputtering method. Furthermore, a resist solution was coated on the laminated metal films using a spin coater, and then prebaking was performed for 1.5 minutes at a temperature of 110 °C. After being exposed by an exposure apparatus, an unnecessary portion was removed by a developing solution, and then pattering was performed by post baking for 5 minutes at a temperature of 150 °C. Then, an unnecessary electrode portion was subject to wet etching using commercially available Au etchant and Cr etchant, and then the resist was stripped so as to form a pair of pattern electrodes (124) each having a desired comb shaped electrode portion (124a). Then, the resulting elements were diced into chip elements so as to obtain film evaluation elements (121) to be used for evaluating a B constant and for testing heat resistance.

Note that Comparative Examples in which the film evaluation elements (121) respectively have the composition ratios of $Ti_xAl_yN_z$ outside the range of the present invention and have different crystal systems were similarly produced for comparative evaluation.

<Film Evaluation>

(1) Composition Analysis

The elemental analysis for the thin film thermistor portion (8) obtained by the reactive sputtering method was performed by X-ray photoelectron spectroscopy (XPS). In the XPS, a quantitative analysis was performed for a sputtering surface at a depth of 20 nm from the outermost surface by Ar sputtering. The results are shown in Table 1. In the following tables, the composition ratio is represented by "at %".

In the X-ray photoelectron spectroscopy (XPS), a quantitative analysis was performed under the conditions of an X-ray source of MgK$\alpha$ (350 W), a path energy of 58.5 eV, a measurement interval of 0.125 eV, a photo-electron take-off angle with respect to a sample surface of 45 deg, and an analysis area of about 800 $\mu$m$\varphi$. For the quantification precision, the quantification precision of N/(Ti+Al+N) was $\pm$2%, and the quantification precision of Al/(Ti+Al) was $\pm$1%.

(2) Specific Resistance Measurement

The specific resistance of each of the thin film thermistor portions (8) obtained by the reactive sputtering method was measured by the four-probe method at a temperature of 25 °C. The results are shown in Table 1.

(3) Measurement of B constant

The resistance value for each of the film evaluation elements (121) at temperatures of 25 °C and 50 °C was measured in a constant temperature bath, and a B constant was calculated based on the resistance values at temperatures of 25 °C and 50 °C. The results are shown in Table 1.

In the B constant calculating method of the present invention, the B constant is calculated by the following formula using the resistance values at temperatures of 25 °C and 50 °C.

B constant (K) = ln(R25/R50)/(1/T25-1/T50)

R25 ($\Omega$) : resistance value at 25 °C

R50 ($\Omega$) : resistance value at 50 °C

T25 (K): 298.15 K which is absolute temperature of 25 °C expressed in Kelvin

T50 (K): 323.15 K which is absolute temperature of 50 °C expressed in Kelvin

As can be seen from these results, a thermistor characteristic having a resistivity of 100 $\Omega$cm or greater and a B constant of 1500 K or greater is achieved in all Examples in which the composition ratio of Ti$_x$Al$_y$N$_z$ falls within the region enclosed by the points A, B, C, and D in the Ti-Al-N-based ternary phase diagram as shown in FIG. 3, i.e., the region where "$0.70 \leq y/(x+y) \leq 0.95$, $0.4 \leq z \leq 0.5$, and $x+y+z = 1$".

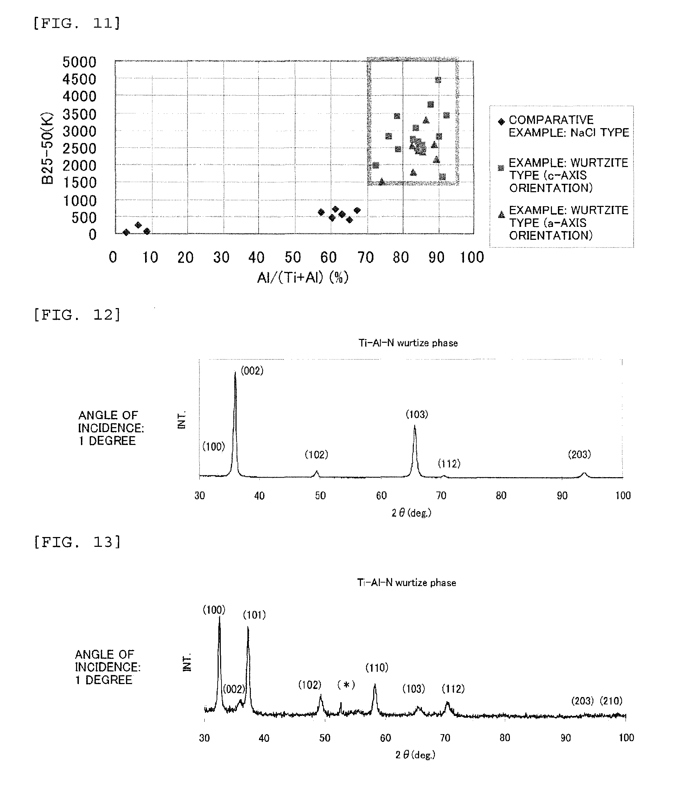

From the above results, a graph illustrating the relationship between a resistivity at 25 °C and a B constant is shown in FIG. 10. Also, a graph illustrating the relationship between the Al/(Ti+Al) ratio and the B constant is shown in FIG. 11. From these graphs, the film evaluation elements (121) which fall within the region where Al/(Ti+Al) is from 0.7 to 0.95 and N/(Ti+Al+N) is from 0.4 to 0.5 and the crystal system thereof is a hexagonal wurtzite-type single phase have a specific resistance value at a temperature of 25 °C of 100 $\Omega$cm or greater and a B constant of 1500 K or greater, and thus, fall within the region of high resistance and high B constant. In data shown in FIG. 11, the reason why the B constant varies with respect to the same Al/(Ti+Al) ratio is because the film evaluation elements (121) have different amounts of nitrogen in their crystals.

Comparative Examples 3 to 12 shown in Table 1 fall within the region where Al/(Ti+Al) < 0.7, and the crystal system thereof is a cubic NaCl-type phase. In Comparative Example 12 (Al/(Ti+Al) = 0.67), a NaCl-type phase and a wurtzite-type phase coexist. Thus, the region where Al/(Ti+Al) < 0.7 exhibits a specific resistance value at a temperature of 25 °C of less than 100 $\Omega$cm and a B constant of less than 1500 K, and thus, is a region of low resistance and low B constant.

Comparative Examples 1 and 2 shown in Table 1 fall within the region where N/(Ti+Al+N) is less than 40%, and thus, are in a crystal state where nitridation of metals contained therein is insufficient. Comparative Examples 1 and 2 were neither a NaCl-type nor a wurtzite-type and had very poor crystallinity. In addition, it was found that Comparative Examples 1 and 2 exhibited near-metallic behavior because both the B constant and the resistance value were very small.

(4) Thin film X-ray diffraction (identification of crystal phase)

The crystal phases of the thin film thermistor portions (8) obtained by the reactive sputtering method were identified by Grazing Incidence X-ray Diffraction. The thin film X-ray diffraction is a small angle X-ray diffraction experiment. Measurement was performed under the condition of Cu X-ray tube, the angle of incidence of 1 degree, and 2$\theta$ of from 20 to 130 degrees.

As a result of measurement, a wurtzite-type phase (hexagonal crystal, the same phase as that of AlN) was obtained in the region where Al/(Ti+Al) $\geq$ 0.7, whereas a NaCl-type phase (cubic crystal, the same phase as that of TiN) was obtained in the region where Al/(Ti+Al) < 0.65. A crystal phase in which a wurtzite-type phase and a NaCl-type phase coexist was obtained in the region where 0.65 < Al/(Ti+Al) < 0.7.

Thus, in the Ti-Al-N-based metal nitride material, the region of high resistance and high B constant exists in the wurtzite-type phase where Al/(Ti+Al) $\geq$ 0.7. In Examples of the present invention, no impurity phase was confirmed and the crystal structure thereof was a wurtzite-type single phase.

In Comparative Examples 1 and 2 shown in Table 1, the crystal phase thereof was neither a wurtzite-type phase nor a NaCl-type phase as described above, and thus, could not be identified in the testing. In these Comparative Examples, the peak width of XRD was very large, resulting in obtaining materials exhibiting very poor crystallinity. It is contemplated that the crystal phase thereof was a metal phase with insufficient nitridation because Comparative Examples 1 and 2 exhibited near-metallic behavior from the viewpoint of electric characteristics.

[Table 1]

| | CRYSTAL SYSTEM | XRD PEAK INTENSITY RATIO OF (100)/(002) WHEN CRYSTAL PHASE IS WURTZITE TYPE PHASE | CRYSTAL AXIS EXHIBITING STRONG DEGREE OF ORIENTATION IN VERTICAL DIRECTION TO SUBSTRATE SURFACE WHEN CRYSTAL PHASE IS WURTZITE TYPE PHASE (a-AXIS OR $\varepsilon$-AXIS) | SPUTTERING GAS PRESSURE (Pa) | COMPOSITION RATIO | | | | RESULT OF ELECTRIC PROPERTIES | |
|---|---|---|---|---|---|---|---|---|---|---|
| | | | | | Ti(%) | Al(%) | N(%) | Al/(Ti+Al) (%) | BCONSTANT (K) | SPECIFIC RESISTANCE VALUE AT 25°C ($\Omega$cm) |
| COMPARATIVE EXAMPLE 1 | UNKNOWN (INSUFFICIENT NITRIDATION) | - | | - | 29 | 43 | 28 | 60 | <0 | 2.E-04 |
| COMPARATIVE EXAMPLE 2 | UNKNOWN (INSUFFICIENT NITRIDATION) | - | | - | 16 | 54 | 30 | 77 | 25 | 4.E-04 |
| COMPARATIVE EXAMPLE 3 | NaCl TYPE | - | | - | 50 | 0 | 50 | 0 | <0 | 2.E-05 |
| COMPARATIVE EXAMPLE 4 | NaCl TYPE | - | | - | 47 | 1 | 52 | 3 | 30 | 2.E-04 |
| COMPARATIVE EXAMPLE 5 | NaCl TYPE | - | | - | 51 | 3 | 46 | 6 | 248 | 1.E-03 |
| COMPARATIVE EXAMPLE 6 | NaCl TYPE | - | | - | 50 | 5 | 45 | 9 | 69 | 1.E-03 |
| COMPARATIVE EXAMPLE 7 | NaCl TYPE | - | | - | 23 | 30 | 47 | 57 | 622 | 3.E-01 |
| COMPARATIVE EXAMPLE 8 | NaCl TYPE | - | | - | 22 | 33 | 45 | 60 | 477 | 2.E-01 |

| | CRYSTAL SYSTEM | XRD PEAK INTENSITY RATIO OF (100)/(002) WHEN CRYSTAL PHASE IS WURTZITE TYPE PHASE | CRYSTAL AXIS EXHIBITING STRONG DEGREE OF ORIENTATION IN VERTICAL DIRECTION TO SUBSTRATE SURFACE WHEN CRYSTAL PHASE IS WURTZITE TYPE PHASE (a-AXIS OR $\varepsilon$-AXIS) | SPUTTERING GAS PRESSURE (Pa) | COMPOSITION RATIO | | | | RESULT OF ELECTRIC PROPERTIES | |
|---|---|---|---|---|---|---|---|---|---|---|
| | | | | | Ti(%) | Al(%) | N(%) | Al/(Ti+Al) (%) | BCONSTANT (K) | SPECIFIC RESISTANCE VALUE AT 25°C ($\Omega$cm) |
| COMPARATIVE EXAMPLE 9 | NaCl TYPE | - | | - | 21 | 32 | 47 | 61 | 724 | 4.E+00 |
| COMPARATIVE EXAMPLE 10 | NaCl TYPE | - | | - | 20 | 34 | 46 | 63 | 564 | 5.E-01 |
| COMPARATIVE EXAMPLE 11 | NaCl TYPE | - | | - | 19 | 35 | 46 | 65 | 402 | 5.E-02 |
| COMPARATIVE EXAMPLE 12 | NaCl TYPE + WURTZITE TYPE | - | | - | 18 | 37 | 45 | 67 | 665 | 2.E+00 |
| EXAMPLE 1 | WURTZITE TYPE | 0.05 | c-AXIS | <0.67 | 15 | 38 | 47 | 72 | 1980 | 4.E+02 |
| EXAMPLE 2 | WURTZITE TYPE | 0.07 | C-AXIS | <0.67 | 12 | 38 | 50 | 76 | 2798 | 5.E+04 |
| EXAMPLE 3 | WURTZITE TYPE | 0.45 | c-AXIS | <0.67 | 11 | 42 | 47 | 79 | 3385 | 1.E+05 |
| EXAMPLE 4 | WURTZITE TYPE | <0.01 | c-AXIS | <0.67 | 11 | 41 | 48 | 79 | 2437 | 4.E+02 |

| | CRYSTAL SYSTEM | XRD PEAK INTENSITY RATIO OF (100)/(002) WHEN CRYSTAL PHASE IS WURTZITE TYPE PHASE | CRYSTAL AXIS EXHIBITING STRONG DEGREE OF ORIENTATION IN VERTICAL DIRECTION TO SUBSTRATE SURFACE WHEN CRYSTAL PHASE IS WURTZITE TYPE PHASE (a-AXIS OR ε-AXIS) | SPUTTERING GAS PRESSURE (Pa) | COMPOSITION RATIO | | | | RESULT OF ELECTRIC PROPERTIES | |
| --- | --- | --- | --- | --- | --- | --- | --- | --- | --- | --- |
| | | | | | Ti(%) | Al(%) | N(%) | Al/(Ti+Al) (%) | BCONSTANT (K) | SPECIFIC RESISTANCE VALUE AT 25°C (Ωcm) |
| EXAMPLE 5 | WURTZITE TYPE | 0.34 | c-AXIS | <0.67 | 9 | 43 | 48 | 83 | 2727 | 2.E+04 |
| EXAMPLE 6 | WURTZITE TYPE | <0.01 | c-AXIS | <0.67 | 8 | 42 | 50 | 84 | 3057 | 2.E+05 |
| EXAMPLE 7 | WURTZITE TYPE | 0.09 | c-AXIS | <0.67 | 8 | 44 | 48 | 84 | 2665 | 3.E+03 |
| EXAMPLE 8 | WURTZITE TYPE | 0.05 | c-AXIS | <0.67 | 8 | 44 | 48 | 85 | 2527 | 1.E+03 |
| EXAMPLE 9 | WURTZITE TYPE | <0.01 | c-AXIS | <0.67 | 8 | 45 | 47 | 86 | 2557 | 8.E+02 |
| EXAMPLE 10 | WURTZITE TYPE | 0.04 | c-AXIS | <0.67 | 7 | 46 | 46 | 86 | 2449 | 1.E+03 |
| EXAMPLE 11 | WURTZITE TYPE | 0.24 | c-AXIS | <0.67 | 7 | 48 | 45 | 88 | 3729 | 4.E+05 |
| EXAMPLE 12 | WURTZITE TYPE | 0.73 | c-AXIS | <0.67 | 5 | 49 | 46 | 90 | 2798 | 5.E+05 |
| EXAMPLE 13 | WURTZITE TYPE | <0.01 | c-AXIS | <0.67 | 5 | 45 | 50 | 90 | 4449 | 3.E+06 |

EP 2 933 642 A1

| | CRYSTAL SYSTEM | XRD PEAK INTENSITY RATIO OF (100)/(002) WHEN CRYSTAL PHASE IS WURTZITE TYPE PHASE | CRYSTAL AXIS EXHIBITING STRONG DEGREE OF ORIENTATION IN VERTICAL DIRECTION TO SUBSTRATE SURFACE WHEN CRYSTAL PHASE IS WURTZITE TYPE PHASE (a-AXIS OR ε-AXIS) | SPUTTERING GAS PRESSURE (Pa) | COMPOSITION RATIO | | | | RESULT OF ELECTRIC PROPERTIES | |
|---|---|---|---|---|---|---|---|---|---|---|
| | | | | | Ti(%) | Al(%) | N(%) | Al/(Ti+Al) (%) | BCONSTANT (K) | SPECIFIC RESISTANCE VALUE AT 25°C (Ωcm) |
| EXAMPLE 14 | WURTZITE TYPE | 0.38 | c-AXIS | <0.67 | 5 | 50 | 45 | 91 | 1621 | 1.E+02 |
| EXAMPLE 15 | WURTZITE TYPE | 0.13 | c-AXIS | <0.67 | 4 | 50 | 46 | 93 | 3439 | 6.E+05 |
| EXAMPLE 16 | WURTZITE TYPE | 3.54 | a-AXIS | ≧ 0.67 | 15 | 43 | 42 | 74 | 1507 | 3.E+02 |
| EXAMPLE 17 | WURTZITE TYPE | 2.94 | a-AXIS | ≧ 0.67 | 10 | 49 | 41 | 83 | 1794 | 3.E+02 |
| EXAMPLE 18 | WURTZITE TYPE | 1.05 | a-AXIS | ≧ 0.67 | 6 | 52 | 42 | 90 | 2164 | 1.E+02 |
| EXAMPLE 19 | WURTZITE TYPE | 2.50 | a-AXIS | ≧ 0.67 | 9 | 44 | 47 | 83 | 2571 | 5.E+03 |
| EXAMPLE 20 | WURTZITE TYPE | 9.09 | a-AXIS | ≧ 0.67 | 8 | 46 | 46 | 84 | 2501 | 6.E+03 |
| EXAMPLE 21 | WURTZITE TYPE | 6.67 | a-AXIS | ≧ 0.67 | 8 | 45 | 47 | 84 | 2408 | 7.E+03 |
| EXAMPLE 22 | WURTZITE TYPE | 2.22 | a-AXIS | ≧ 0.67 | 8 | 46 | 46 | 86 | 2364 | 3.E+04 |

(continued)

| | CRYSTAL SYSTEM | XRD PEAK INTENSITY RATIO OF (100)/(002) WHEN CRYSTAL PHASE IS WURTZITE TYPE PHASE | CRYSTAL AXIS EXHIBITING STRONG DEGREE OF ORIENTATION IN VERTICAL DIRECTION TO SUBSTRATE SURFACE WHEN CRYSTAL PHASE IS WURTZITE TYPE PHASE (a-AXIS OR $\varepsilon$-AXIS) | SPUTTERING GAS PRESSURE (Pa) | COMPOSITION RATIO | | | | RESULT OF ELECTRIC PROPERTIES | |
|---|---|---|---|---|---|---|---|---|---|---|
| | | | | | Ti(%) | Al(%) | N(%) | Al/(Ti+Al) (%) | BCONSTANT (K) | SPECIFIC RESISTANCE VALUE AT 25°C ($\Omega$cm) |
| EXAMPLE 23 | WURTZITE TYPE | 1.21 | a-AXIS | $\geqq 0.67$ | 7 | 46 | 47 | 87 | 3317 | 2.E+06 |
| EXAMPLE 24 | WURTZITE TYPE | 3.33 | a-AXIS | $\geqq 0.67$ | 6 | 51 | 43 | 89 | 2599 | 7.E+04 |

**EP 2 933 642 A1**

Next, all of Examples in the present invention were wurtzite-type phase films having strong orientation. Thus, whether the films have strong a-axis orientation or c-axis orientation to the crystal axis in a vertical direction (film thickness direction) to the Si substrate (S) was examined by XRD. At this time, in order to examine the orientation of crystal axis, the peak intensity ratio of (100)/(002) was measured, where (100) is the Miller index indicating a-axis orientation and (002) is the Miller index indicating c-axis orientation.

Consequently, in Examples in which film deposition was performed at a sputtering gas pressure of less than 0.67 Pa, the intensity of (002) was much stronger than that of (100), so that the films exhibited stronger c-axis orientation than a-axis orientation. On the other hand, in Examples in which film deposition was performed at a sputtering gas pressure of 0.67 Pa or greater, the intensity of (100) was much stronger than that of (002), so that the films exhibited stronger a-axis orientation than c-axis orientation.

Note that it was confirmed that a wurtzite-type single phase was formed in the same manner even if the thin film thermistor portion (8) was deposited on a polyimide film under the same deposition condition. In addition, it was confirmed that the crystal orientation did not change even if the thin film thermistor portion (8) was deposited on a polyimide film under the same deposition condition.

An exemplary XRD profile in Example exhibiting strong c-axis orientation is shown in FIG. 12. In this Example, Al/(Ti+Al) was equal to 0.84 (wurtzite-type, hexagonal crystal), and measurement was performed at the angle of incidence of 1 degree. As can be seen from the result in this Example, the intensity of (002) was much stronger than that of (100).

An exemplary XRD profile in Example exhibiting strong a-axis orientation is shown in FIG. 13. In this Example, Al/(Ti+Al) was equal to 0.83 (wurtzite-type, hexagonal crystal), measurement was performed at the angle of incidence of 1 degree. As can be seen from the result in this Example, the intensity of (100) was much stronger than that of (002).

Furthermore, in this Example, symmetrical reflective measurement was performed at the angle of incidence of 0 degrees. The asterisk (*) in the graph was a peak derived from the device, and thus, it was confirmed that the asterisk (*) in the graph is neither a peak derived from the sample itself nor a peak derived from the impurity phase (it can be seen from the fact that the peak indicated by (*) is lost in the symmetrical reflective measurement, and thus, it is a peak derived from the device).

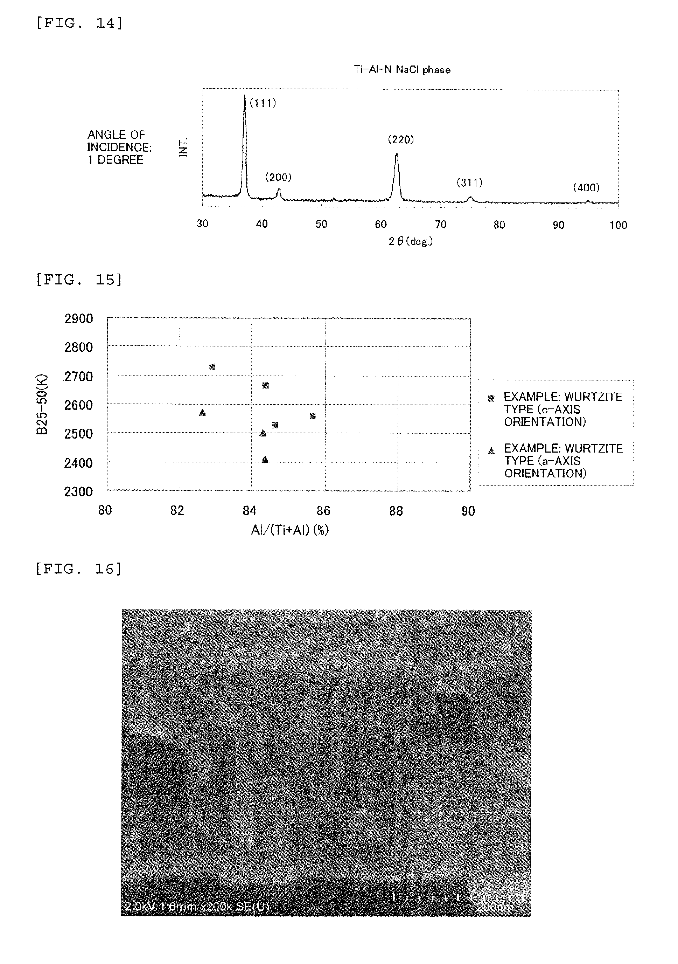

An exemplary XRD profile in Comparative Example is shown in FIG. 14. In this Comparative Example, Al/(Ti+Al) was equal to 0.6 (NaCl type, cubic crystal), and measurement was performed at the angle of incidence of 1 degree. No peak which could be indexed as a wurtzite-type (space group P6$_3$mc (No. 186)) was detected, and thus, this Comparative Example was confirmed as a NaCl-type single phase.

Next, the correlation between a crystal structure and its electric characteristic was compared in detail with each other with regard to Examples of the present invention in which the wurtzite-type materials were employed.

As shown in Table 2 and FIG. 15, there were materials (Examples 5, 7, 8, and 9) of which the crystal axis is strongly oriented along a c-axis in a vertical direction to the surface of the substrate and materials (Examples 19, 20, and 21) of which the crystal axis is strongly oriented along an a-axis in a vertical direction to the surface of the substrate despite the fact that they have substantially the same Al/(Ti+Al) ratio.

When both groups were compared to each other, it was found that the materials having a strong c-axis orientation had a greater B constant by about 100 K than that of the materials having a strong a-axis orientation upon the same Al/(Ti+Al) ratio. When focus was placed on the amount of N (N/(Ti+Al+N)), it was found that the materials having a strong c-axis orientation had a slightly larger amount of nitrogen than that of the materials having a strong a-axis orientation. Since the ideal stoichiometric ratio of N/(Ti+Al+N) is 0.5, it was found that the materials having a strong c-axis orientation were ideal materials due to a small amount of nitrogen defects.

[Table 2]

| | CRYSTAL SYSTEM | XRD PEAK INTENSITY RATIO OF (100)/(002) WHEN CRYSTAL PHASE IS WURTZITE TYPE PHASE | CRYSTAL AXIS EXHIBITING STRONG DEGREE OF ORIENTATION IN VERTICAL DIRECTION TO SUBSTRATE SURFACE WHEN CRYSTAL PHASE IS WURTZITE TYPE PHASE (a-AXIS OR c-AXIS) | SPUTTERING GAS PRESSURE (Pa) | COMPOSITION RATIO | | | | RESULT OF ELECTRIC PROPERTIES | |
| | | | | | Ti(%) | Al(%) | N(%) | Al/(Ti+Al) (%) | B CONSTANT (K) | SPECIFIC RESISTANCE VALUE AT 25°C($\Omega$cm) |
|---|---|---|---|---|---|---|---|---|---|---|
| EXAMPLE 5 | WURTZITE TYPE | 0.34 | c-AXIS | <0.67 | 9 | 43 | 48 | 83 | 2727 | 2.E+04 |
| EXAMPLE 7 | WURTZITE TYPE | 0.09 | c-AXIS | <0.67 | 8 | 44 | 48 | 84 | 2665 | 3.E+03 |
| EXAMPLE 8 | WURTZITE TYPE | 0.05 | c-AXIS | <0.67 | 8 | 44 | 48 | 85 | 2527 | 1.E+03 |
| EXAMPLE 9 | WURTZITE TYPE | <0.01 | c-AXIS | <0.67 | 8 | 45 | 47 | 86 | 2557 | 8.E+02 |
| EXAMPLE 19 | WURTZITE TYPE | 2.50 | a-AXIS | ≧0.67 | 9 | 44 | 47 | 83 | 2571 | 5.E+03 |
| EXAMPLE 20 | WURTZITE TYPE | 9.09 | a-AXIS | ≧0.67 | 8 | 46 | 46 | 84 | 2501 | 6.E+03 |
| EXAMPLE 21 | WURTZITE TYPE | 6.67 | a-AXIS | ≧0.67 | 8 | 45 | 47 | 84 | 2408 | 7.E+03 |

<Crystalline Form Evaluation>

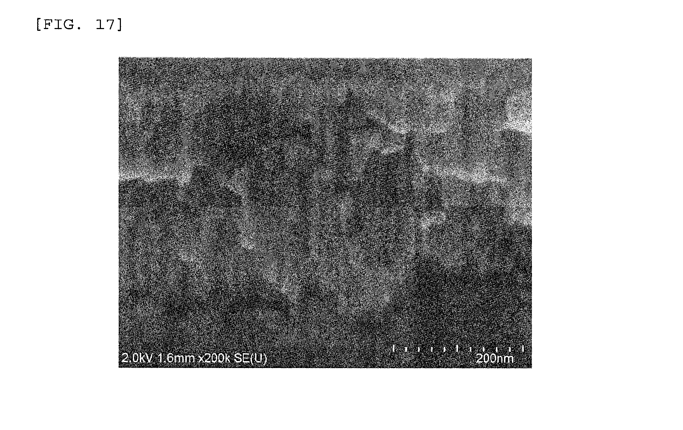

Next, as an exemplary crystal form in the cross-section of the thin film thermistor portion (8), a cross-sectional SEM photograph of the thin film thermistor portion (8) in Example (Al/(Ti+Al) = 0.84, wurtzite-type, hexagonal crystal, and strong c-axis orientation) in which the thin film thermistor portion (8) was deposited on the Si substrate (S) with a thermal oxidation film is shown in FIG. 16. Also, a cross-sectional SEM photograph of the thin-film thermistor portion (8) in another Example (Al/(Ti+Al) = 0.83, wurtzite-type, hexagonal crystal, and strong a-axis orientation) is shown in FIG. 17.

The samples in these Examples were obtained by breaking the Si substrates (S) by cleaving them. The photographs were taken by tilt observation at the angle of 45 degrees.

As can be seen from these photographs, samples were formed of a high-density columnar crystal in both Examples. Specifically, the growth of columnar crystal in a direction perpendicular to the surface of the substrate was observed in Example revealing a strong c-axis orientation and another Example revealing a strong a-axis orientation. Note that the break of the columnar crystal was generated upon breaking the Si substrate (S) by cleaving it.

<Film Heat Resistance Test Evaluation>

In Examples and Comparative Example shown in Table 1, a resistance value and a B constant before and after the heat resistance test at a temperature of 125 °C for 1000 hours in air were evaluated. The results are shown in Table 3. Comparative Example made by a conventional Ta-Al-N-based material was also evaluated in the same manner for comparison.

As can be seen from these results, although the Al concentration and the nitrogen concentration vary, the heat resistance of the Ti-Al-N-based material based on the electric characteristic change before and after the heat resistance test is better than the Ta-Al-N-based material in Comparative Example when comparison is made by using the same B constant. Note that the materials used in Examples 5 and 8 have a strong c-axis orientation and the materials used in Examples 21 and 24 have a strong a-axis orientation. When both groups were compared to each other, the heat resistance of Examples revealing a strong c-axis orientation is slightly improved as compared with that of Examples revealing a strong a-axis orientation.

Note that, in the Ta-Al-N-based material, ionic radius of Ta is very high compared to that of Ti and Al, and thus, a wurtzite-type phase cannot be produced in the high-concentration Al region. It is contemplated that the Ti-Al-N-based material having the wurtzite-type phase has better heat resistance than the Ta-Al-N-based material because the Ta-Al-N-based material is not the wurtzite-type phase.

[Table 3]

| | M ELEMENT | M(%) | Al(%) | N(%) | Al/(M+Al) (%) | B25-50 (K) | SPECIFIC RESISTANCE VALUE AT 25°C (Ω cm) | RISING RATE OF SPECIFIC RESISTANCE AT 25°C AFTER HEAT RESISTANCE TEST AT 125°C FOR 1,000 HOURS (%) | RISING RATE OF B CONSTANT AFTER HEAT RESISTANCE TEST AT 125°C FOR 1,000 HOURS (%) |
|---|---|---|---|---|---|---|---|---|---|
| COMPARATIVE EXAMPLE | Ta | 60 | 1 | 39 | 2 | 2671 | 5.E+02 | 25 | 16 |
| EXAMPLE 5 | Ti | 9 | 43 | 48 | 83 | 2727 | 2.E+04 | < 4 | < 1 |
| EXAMPLE 8 | Ti | 8 | 44 | 48 | 85 | 2527 | 1.E+03 | < 4 | < 1 |
| EXAMPLE 21 | Ti | 8 | 45 | 47 | 84 | 2408 | 7.E+03 | < 5 | < 1 |
| EXAMPLE 24 | Ti | 6 | 51 | 43 | 89 | 2599 | 7.E+04 | < 5 | < 1 |

The technical scope of the present invention is not limited to the aforementioned embodiments and Examples, but the present invention may be modified in various ways without departing from the scope or teaching of the present invention.

For example, although the heat-sensitive element for compensation and the cover member are disposed outside the duct and the temperature of gas flow is measured via a hole portion, the heat-sensitive element for compensation and the cover member may also be disposed in the duct as long as they are located at positions which do not affect gas flow. In this case, it is preferable that the cover member is set to have a shape such as a streamlined shape which does not affect gas flow.

[Reference Numerals]

1: gas flow sensor, 2: duct, 3A: heat-sensitive element for measurement, 3B: heat-sensitive element for compensation, 4: support mechanism, 5: cover member, 7: insulating film, 8: thin film thermistor portion, 9: comb electrode, 9a: comb portion, 10: pattern electrode, 11A: measurement lead frame, 11B: compensation lead frame, 13: protective film, Y: gas flow direction

**Claims**

1. A gas flow sensor comprising:

    a heat-sensitive element for measurement disposed inside a duct through which a gas to be measured flows; and
    a support mechanism for supporting the heat-sensitive element for measurement inside the duct;
    wherein the heat-sensitive element for measurement comprises:

        an insulating film;
        a thin film thermistor portion formed on the surface of the insulating film with a thermistor material;
        a pair of comb electrodes which have a plurality of comb portions and are pattern-formed on at least one of the top or the bottom of the thin film thermistor portion using a metal so as to face each other; and
        a pair of pattern electrodes which are pattern-formed on the surface of the insulating film and are connected to the pair of comb electrodes, and

    wherein the support mechanism is disposed such that the planar direction of the insulating film is parallel to the direction of gas flow in the duct.

2. The gas flow sensor according to claim 1,
    wherein the support mechanism comprises a pair of tabular measurement lead frames for supporting the insulating film with the distal ends of the measurement lead frames being connected to the pair of pattern electrodes, and the support mechanism is disposed such that the planar direction of the pair of measurement lead frames is parallel to the direction of gas flow in the duct.

3. The gas flow sensor according to claim 1, further comprising:

    a heat-sensitive element for compensation disposed apart from the heat-sensitive element for measurement at a position at which the temperature of gas in the duct is measurable; and
    a cover member for covering the heat-sensitive element for compensation so as to interrupt the gas flow.

4. The gas flow sensor according to claim 1,
    wherein the thin film thermistor portion consists of a metal nitride represented by the general formula: $Ti_xAl_yN_z$ (where $0.70 \leq y/(x+y) \leq 0.95$, $0.4 \leq z \leq 0.5$, and $x+y+z = 1$), and the crystal structure thereof is a hexagonal wurtzite-type single phase.

[FIG. 1]

[FIG. 2]

[FIG. 3]

(a)

(b)

[FIG. 4]

[FIG. 5]

[FIG. 6]

(a)

(b)

[FIG. 7]

(a)

(b)

[FIG. 8]

[FIG. 9]

[FIG. 10]

[FIG. 11]

[FIG. 12]

Ti-Al-N wurtize phase

ANGLE OF INCIDENCE: 1 DEGREE

$2\theta$ (deg.)

[FIG. 13]

Ti-Al-N wurtize phase

ANGLE OF INCIDENCE: 1 DEGREE

$2\theta$ (deg.)

[FIG. 14]

Ti–Al–N NaCl phase

ANGLE OF
INCIDENCE:
I DEGREE

INT.

(111)

(200)

(220)

(311)

(400)

30    40    50    60    70    80    90    100

$2\theta$ (deg.)

[FIG. 15]

EXAMPLE: WURTZITE TYPE (c–AXIS ORIENTATION)

EXAMPLE: WURTZITE TYPE (a–AXIS ORIENTATION)

[FIG. 16]

2.0kV 1.6mm x200k SE(U)    200nm

[FIG. 17]

2.0kV 1.6mm x200k SE(U)  200nm

[FIG. 18]

(a)  (b)

## INTERNATIONAL SEARCH REPORT

| | International application No. |
| --- | --- |
| | PCT/JP2013/081986 |

### A. CLASSIFICATION OF SUBJECT MATTER
*G01P5/12(2006.01)i, G01F1/692(2006.01)i, H01C7/04(2006.01)i*

According to International Patent Classification (IPC) or to both national classification and IPC

### B. FIELDS SEARCHED

Minimum documentation searched (classification system followed by classification symbols)
G01P5/12, G01F1/68-1/699, G01K7/22

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2012-156273 A  (Mitsubishi Materials Corp.),<br>16 August 2012 (16.08.2012),<br>paragraphs [0002], [0020], [0023]; fig. 2<br>(Family: none) | 1-3<br>4 |
| Y<br>A | JP 1-150818 A  (Mitsubishi Electric Corp.),<br>13 June 1989 (13.06.1989),<br>page 2, upper left column, lines 9 to 14; fig.<br>3<br>& US 4912974 A          & DE 3841057 A | 1-3<br>4 |
| Y | JP 7-229914 A  (Mitsubishi Electric Corp.),<br>29 August 1995 (29.08.1995),<br>paragraph [0003]; fig. 8<br>(Family: none) | 3 |

☒  Further documents are listed in the continuation of Box C.          ☐  See patent family annex.

| | |
| --- | --- |
| *        Special categories of cited documents:<br>"A"    document defining the general state of the art which is not considered    to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search<br>    12 December, 2013 (12.12.13) | Date of mailing of the international search report<br>    24 December, 2013 (24.12.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/081986 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2012-182258 A  (Mitsubishi Materials Corp.), 20 September 2012 (20.09.2012), paragraph [0020] & CN 102651575 A          & CN 202503376 U | 4 |
| A | JP 2004-319737 A  (Osaka-Fu), 11 November 2004 (11.11.2004), paragraphs [0023], [0027] (Family: none) | 4 |
| P,A | WO 2013/147282 A1  (Mitsubishi Materials Corp.), 03 October 2013 (03.10.2013), paragraph [0018] & JP 2013-205319 A | 4 |
| P,A | WO 2013/147310 A1  (Mitsubishi Materials Corp.), 03 October 2013 (03.10.2013), paragraph [0017] & JP 2013-210304 A | 4 |

Form PCT/ISA/210 (continuation of second sheet) (July 2009)

## REFERENCES CITED IN THE DESCRIPTION

**Patent documents cited in the description**

- JP 2010181354 A
- JP 2003075461 A